# EUROPÄISCHE PATENTSCHRIFT

(11) **EP 1 324 856 B1**
(45) Veröffentlichungstag und Bekanntmachung des Hinweises auf die Patenterteilung: **20.12.2006**
(21) Anmeldenummer: 01972092.9
(22) Anmeldetag: 05.10.2001
(51) Int. Cl.: B23Q 1/01, B23Q 11/00, B23Q 11/08

(54) **STÄNDERWERKZEUGMASCHINE**
COLUMN-TYPE MACHINE TOOL
MACHINE-OUTIL A COLONNE

(30) Priorität: 11.10.2000 DE 10050141
(43) Veröffentlichungstag der Anmeldung: 09.07.2003
(73) Patentinhaber: Dörries Scharmann Technologie GmbH, 41236 Mönchengladbach (DE)
(72) Erfinder: STÜDEMANN, Bernd, 41844 Rath-Anhoven (DE); JODL, Werner, 41836 Hückelhoven (DE)
(74) Vertreter: Rehders, Jochen
(86) Internationale Anmeldenummer: PCT/EP2001/011501
(87) Internationale Veröffentlichungsnummer: WO 2002/030615

(56) Entgegenhaltungen:
- DE-A- 2 852 846
- DE-A- 19 605 301
- DE-A- 19 739 429
- DE-A- 19 849 833
- FR-A- 1 432 740
- FR-A- 2 093 333
- US-A- 2 864 269
- US-A- 3 750 245
- US-A- 4 632 615
- US-A- 4 936 174

## Beschreibung

Die Erfindung betrifft eine Ständerwerkzeugmaschine, insbesondere ein Fräsbearbeitungszentrum mit einem verfahrbaren Ständer und einem daran angeordneten Werkzeugträger gemäß dem Oberbegriff des Anspruchs 1.

In der DE 196 45 324 A1 ist eine derartige Ständerwerkzeugmaschine beschrieben, mit einem Maschinenbett, einem auf dem Maschinenbett auf Führungen verfahrbaren Ständer, an dem mindestens ein in mehreren Achsen bewegbares Bearbeitungswerkzeug angeordnet ist, einer Stützstruktur mit Führungen für das obere Ende des Ständers und wenigstens einem, mit den Führungen des Maschinenbetts und der Stützstruktur zusammenwirkenden Verfahrantrieb für den Ständer.

Ist bei dieser Werkzeugmaschine nur ein Verfahrantrieb vorhanden, lassen sich keine ausreichend großen Beschleunigungen beim Verfahren des Ständers erreichen, da dieser Verfahrantrieb weit entfernt vom Schwerpunkt des Ständers angreift und daher beim Beschleunigen ein Kippmoment erzeugt. Durch synchron laufende Verfahrantriebe im Bereich der unteren und der oberen Führung am Ständer wird dieser Nachteil zwar vermieden, jedoch ist der Aufwand für die Verfahrantriebe verdoppelt. Auch die Stützstruktur ist aufwendig, da sie etwa genauso hoch wie der Ständer sein muß, um eine Führung im Bereich des oberen Endes des Ständers anordnen zu können.

Diese Probleme treten auch bei der in der DE 28 52 846 C2 beschriebenen Ständerwerkzeugmaschine auf, deren Ständer ausschließlich in Führungen im Fußbereich auf dem Maschinenbett geführt ist.

Der Erfindung liegt das Problem zugrunde, eine Ständerwerkzeugmaschine zu schatten, die bei einfachen Aufbau und möglichst geringen zu bewegenden Massen eine genaue Führung bei großen Beschleunigungen und Verzögerungen gewährleistet, um dadurch die Zerspanungsleistung und die Bearbeitungsgenauigkeit zu vergrößern. Zusätzlich soll die Spanabfuhr verbessert werden.

Ausgehend von dieser Problemstellung wird bei einer Ständerwerkzeugmaschine der eingangs erwähnten Art vorgeschlagen, daß erfindungsgemäß eine weitere Führung seitlich neben dem Ständer, etwa mittig auf halber Höhe und etwa in Höhe des Schwerpunkts des Ständers angeordnet ist und der Verfahrantrieb am Ständer in Höhe der seitlichen Führung, ohne daß auf den Ständer ein wesentliches Kippmoment wirkt, angreift.

Da die seitlich neben dem Ständer etwa auf halber Höhe des Ständers angeordnete Führung etwa in Höhe des Schwerpunktes des Ständers liegt, kann durch den Verfahrantrieb beim Beschleunigen und Verzögern kein Kippmoment auf den Ständer bewirken, der sich somit nicht auf den Führungen verkanten kann. Somit sind mit nur einem Verfahrantrieb hohe Beschleunigungs- und Verzögerungsleistungen möglich, ohne einen doppelten Verfahrantrieb mit den damit verbundenen Komplikationen vorsehen zu müssen.

Auch wenn an dem Ständer ein senkrecht verfahrbarer Werkzeugträger angeordnet ist, bleiben die vorerwähnten Vorteile erhalten, selbst wenn sich der Werkzeugträger in seiner untersten oder obersten Stellung am Ständer befindet, da sich die Masse des Werkzeugträgers im Verhältnis zum Ständer klein halten läßt und die größte Entfernung vom Schwerpunkt maximal nur gleich der halben Ständerhöhe sein kann.

Der Werkzeugträger läßt sich als Universalwerkzeugträger zur Aufnahme eines Drehwerkzeugs, vorzugsweise in einem parallel zu den Führungen verfahrbaren Werkzeugschieber oder als Spindelkasten mit daran angeordneter, waagerechter Arbeitsspindel, die vorzugsweise parallel zu den Führungen des Ständers verläuft, ausbilden.

Die Arbeitsspindel kann im Werkzeugträger axial verfahrbar angeordnet sein.

Ein auf Führungen quer zu den Führungen des Ständers verfahrbarer Werkstücktisch, der vorzugsweise drehbar sein kann, kann vor dem Ständer angeordnet sein, so daß der Werkzeugtisch eine Vorschubbewegung in der X-Achse, der Werkzeugträger eine Vorschubbewegung in der Y-Achse und der Ständer eine Vorschubbewegung in der Z-Achse ausführen können.

Mit der erfindungsgemäßen Anordnung läßt sich die Späneabfuhr verbessern, da sich unter einem Winkel von mindestens 45 ° verlaufende Abdeckungen im Bereich der Führungen am Maschinenbett anordnen lassen. Diese Abdeckungen leiten dagegen geschleuderte Späne in einen Spänetrog unterhalb des Werkzeugträgers, die daraus mittels eines Späneförderers entfernt werden.

Über den dem Ständer benachbarten Führungen für den Werkzeugtisch können dachförmige Teleskopabdeckungen und über den dem Ständer abgewandten Führungen für den Werkzeugtisch können schräge Teleskopabdeckungen angeordnet sein durch die die Späne in beiderseits der dachförmigen Teleskopabdeckung angeordnete Spänetröge geleitet werden.

Aus diesen Spänetrögen werden die Späne durch Späneförderer entfernt, wobei der Späneförderer im Spänetrog am Ständer in den den dachförmigen Teleslcopabeckungen benachbarten Spänetrog fördert.

Die Erfindung wird nachstehend anhand eines in der Zeichnung dargestellten Ausführungsbeispiels des näheren erläutert.

In der Zeichnung zeigen:

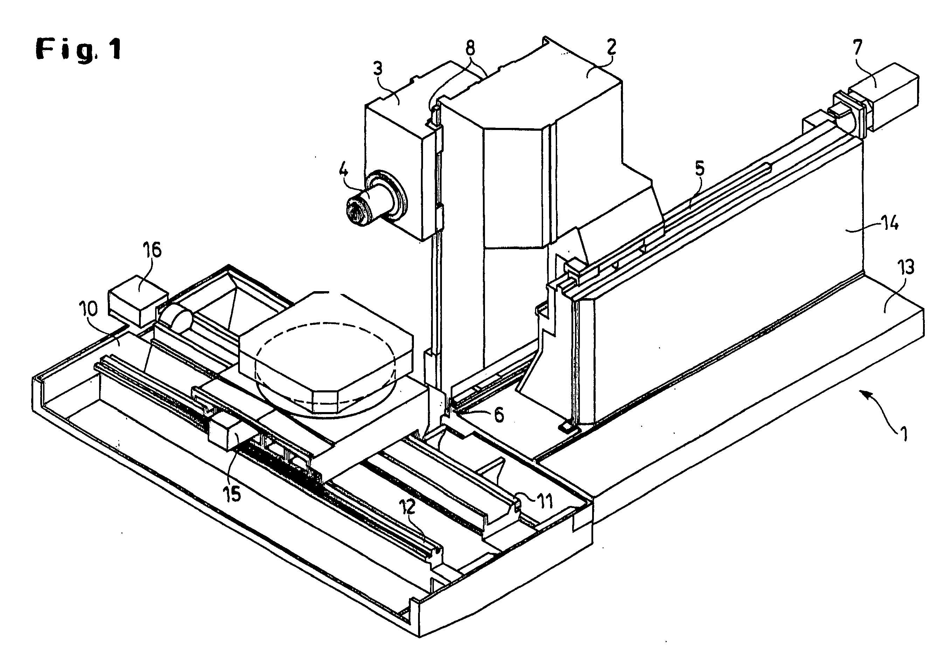

- Fig. 1: eine perspektivische Ansicht der erfindungsgemäßen Ständerwerkzeugmaschine mit abgenommenen Abdeckungen und
- Fig. 2: eine perspektivische Ansicht der erfindungsgemäßen Ständerwerkzeugmaschine aus einem anderen Winkel mit dargestellten Abeckungen auf den Führungen.

Ein allgemein mit der Bezugsziffer 1 bezeichnetes Maschinenbett besteht aus einer waagerechten Grundplatte 13 und einer darauf angeordneten, etwa senkrechten eine Stützstruktur bildenden Platte 14.

Ein Ständer 2 ist mittels einer Führung 6 an einer Kante der Grundplatte 13 und etwa auf halber Höhe mittels einer Führung 5 an der Oberkante der senkrechten Platte 14 geführt. Die untere Führung 6 ist unterhalb des Ständers 2 etwa in seiner senkrechten Schwerpunktsebene angeordnet, während die obere, seitliche Führung 5 etwa auf halber Höhe des Ständers 2 liegt.

Am Ständer 2 ist ein Werkzeugträger 3 an Führungen 8 mittels eines Verfahrantriebs 17 senkrecht verfahrbar. Im dargestellten Ausführungsbeispiel ist der Werkzeugträger 3 als Spindelkasten ausgebildet und trägt eine Arbeitsspindel 4 die ggf im Werkzeugträger 3 axial verfahrbar ausgebildet sein kann.

Die Arbeitsspindel 4 kann zur Aufnahme von Fräsern oder Winkelfräsköpfen ausgebildet sein. Ebenso läßt sich an die Arbeitsspindel 4 eine Planscheibe ansetzen. Schließlich kann die Arbeitsspindel 4 auch als Werkzeugschieber zur Aufnahme eines Drehwerkzeugs ausgebildet sein, wenn ein Werkstück auf dem davor angeordneten Drehtisch 9 nach Art einer Senkrechtdrehmaschine bearbeitet werden soll.

Ein Verfahrantrieb 7 greift am Ständer 2 in Höhe der oberen Führung 5 an, so daß hohe Beschleunigungs- und Verzögerungsleistungen erzielbar sind, ohne daß auf den Ständer ein wesentliches Kippmoment wirkt.

Der Drehtisch 9 ist auf einem Bett 10 mittels Führungen 11, 12 quer zur Bewegungsrichtung des Ständers 2 verfahrbar. Hierfür ist ein Verfahrantrieb 16 vorgesehen. Ein Drehantrieb 15 dient zum Drehen des Drehtischs 9, entweder zum winkelmäßigen Positionieren eines Werkstücks auf dem Drehtisch 9 oder als Drehantrieb für den Drehtisch 9, wenn ein darauf angeordnetes Werkstück mittels eines Drehwerkzeugs drehend bearbeitet werden soll.

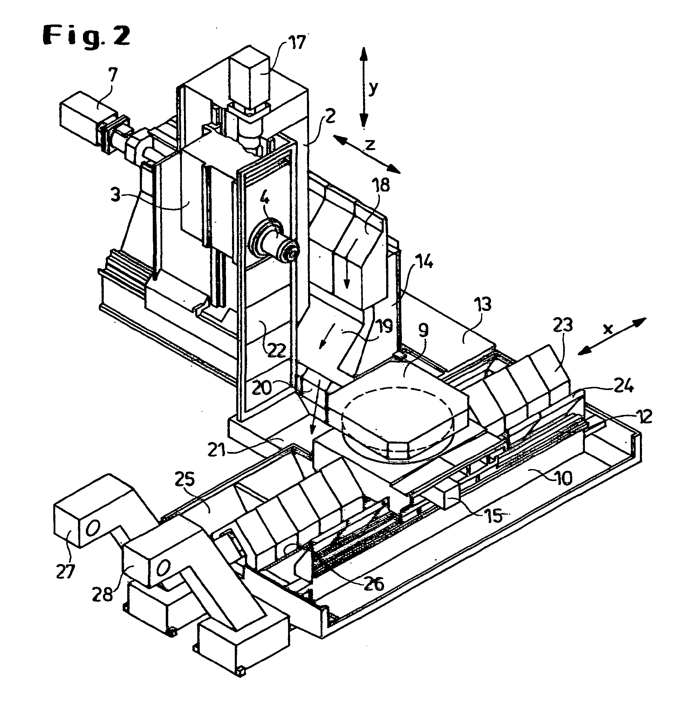

In Fig. 2 sind eine obere, schräge Teleskopabdeckung 18 für die obere Führung 5, ein schräges, unbewegliches Abdeckblech 19 und eine untere schräge Teleskopabdeckung 20 für die untere Führung 6 ersichtlich. Bei der Werkstückbearbeitung gegen die Abdeckungen 18, 19, 20 geschleuderte Späne werden in einen Spänetrog 21 unterhalb eines Werkzeugträgers 3 geleitet. Die Führungen 8 am Ständer 2 werden durch eine ebene Teleskopabdeckung 22 vor Verschmutzung durch Späne geschützt.

Über der Führung 11 für den Drehtisch 9 sind beiderseits des Drehtisches dachförmige Teleskopabdeckungen 23 angeordnet, während für die Führung 12 schräge Teleskopabdeckungen 24 genügen.

Auf der dem Ständer 2 zugewandten Seite der dachförmigen Teleskopabdeckungen 23 ist ein Spänetrog 25 gebildet, während zwischen den dachförmigen Teleskopabdeckungen 23 und den schrägen Teleskopabdeckungen 24 ein weiterer Spänetrog 26 gebildet ist. Die Späne in diesen Spänetrögen 25, 26 werden durch Späneförderer 27, 28 abtransportiert. Die Späne im Spänetrog 21 werden werden mittels eines nicht dargestellten Späneförderers in den Spänetrog 25 transportiert und daraus, wie bereits erwähnt, durch den Späneförderer 27 abtransportiert.

## Patentansprüche

1. Ständerwerkzeugmaschine, insbesondere Fräsbearbeitungszentrum, mit
- einem verfahrbaren Ständer (2) und einem daran angeordneten, senkrecht verfahrbaren Werkzeugträger (3)
- einem Maschinenbett (1)
- einem Verfahrantrieb (7)
- Führungen (5, 6) für den auf dem Maschinenbett (1) verfahrbaren Ständer (2), von denen eine Führung (6) unterhalb des Ständers (2) am Maschinenbett (1) angeordnet ist,
- **dadurch gekennzeichnet daß**, eine weitere Führung (5) seitlich neben dem Ständer (2), etwa mittig auf halber Höhe und etwa in Höhe des Schwerpunkts des Ständers (2) angeordnet ist und
- der Verfahrantrieb (7), am Ständer (2) in Höhe der seitlichen Führung (5), ohne dass auf den Ständer (2) ein wesentliches Kippmoment wirkt, angreift.

2. Ständerwerkzeugmaschine nach Anspruch 1 mit einem Maschinenbett (1) aus einer waagerechten Platte (13) mit der entlang einer seitlichen Kante verlaufenden Führung (6) und einer darauf aufstrebenden, etwa senkrechten, eine Stützstruktur bildenden Platte (14) mit der Führung (5) an der Oberkante.

3. Ständerwerkzeugmaschine nach Anspruch 1 oder 2, mit einem zur Aufnahme eine Drehwerkzeugs ausgebildeten Werkzeugträger (3).

4. Ständerwerkzeugmaschine nach Anspruch 3, mit einem parallel zu den Führungen (5, 6) verfahrbaren Werkzeugschieber zur Aufnahme des Drehwerkzeugs.

5. Ständerwerkzeugmaschine nach Anspruch 1, oder 2, mit einem als Spindelkasten ausgebildeten Werkzeugträger (3).

6. Ständerwerkzeugmaschine nach Anspruch 5, mit am Spindelkasten (3) angeordneter, waagerechter Arbeitsspindel (4).

7. Ständerwerkzeugmaschine nach Anspruch 6, mit parallel zu den Führungen (5, 6) verlaufender Arbeitsspindelachse.

8. Ständerwerkzeugmaschine nach Anspruch 5, 6 oder 7 mit einer axial verfahrbaren Arbeitsspindel (4).

9. Ständerwerkzeugmaschine nach einem der Ansprüche 1 bis 8, mit einem auf Führungen (11, 12) quer zu den Führungen (5, 6) des Ständers (2) verfahrbaren Werkstücktisch (9).

10. Ständerwerkzeugmaschine nach Anspruch 9, mit einem drehbaren Werkzeugtisch (9).

11. Ständerwerkzeugmaschine nach einem der Ansprüche 1 bis 10, mit schräg,unter einem Winkel von mindestens 45 ° verlaufenden, dagegen geschleuderte Späne in einen Spänetrog (21) unterhalb des Werkzeugträgers (3) leitenden Abdeckungen (18, 19, 20) im Bereich der Führungen (5, 6) am Maschinenbett (1) und einem Späneförderer im Spänetrog (21).

12. Ständerwerkzeugmaschine nach Anspruch 9, 10 oder 11, mit dachförmigen Teleslcopabdeckungen (23) über dem Ständer (2) benachbarten Führungen (11) für den Werkzeugtisch (9) und einer schrägen Teleskopabdeckung (24) über einer dem Ständer (2) abgewandten Führungen (12) für den Werkzeugtisch (9) sowie Spänetrögen (25, 26) mit Späneförderern (27, 28) beiderseits der dachförmigen Teleskopabdeckung (23).

13. Ständerwerkzeugmaschine nach Anspruch 12, bei der der Späneförderer im Spänetrog (21) am Ständer (2) in den den dachförmigen Teleskopabdeckungen (23) benachbarten Spänetrog (25) fördert.

## Claims

1. Column-type machine tool, in particular a milling centre, having
- a movable column (2) and a tool support (3) positioned on same that can be moved vertically
- a machine bench (1)
- a movement drive unit (7)
- guides (5, 6) for the column (2), that is movable on the machine bench (1), of which guides one (6) is positioned below the column (2) on the machine bench (1),
**characterised in that**
- a further guide (5) is positioned laterally beside the column (2), approximately in the centre halfway up and approximately at the level of the centre of gravity of the column (2), and
- the movement drive unit (7) engages with the column (2) at the level of the lateral guide (5) without any significant tilting moment being exerted on the column (2).

2. Column-type machine tool as in claim 1, having a machine bench (1) comprising a horizontal plate (13) with the guide (6) running along one lateral edge, and a roughly vertical plate (14) that rises upwards from same with the guide (5) on the top edge, and that forms a supporting structure.

3. Column-type machine tool as in claim 1 or 2, having a tool support (3) for holding a lathe tool.

4. Column-type machine tool as in claim 3, having a tool slider that can be moved parallel to the guides (5, 6) for holding the lathe tool.

5. Column-type machine tool as in claim 1 or 2, having a tool support (3) in the form of a headstock.

6. Column-type machine tool as in claim 5, having a horizontal lathe spindle (4) on the headstock (3).

7. Column-type machine tool as in claim 6, having a lathe spindle axis that runs parallel to the guides (5, 6).

8. Column-type machine tool as in claim 5, 6 or 7, having a lathe spindle (4) that can be moved axially.

9. Column-type machine tool as in one of claims 1 to 8, having a work table (9) that can be moved on guides (11, 12) at right angles to the guides (5, 6) of the column (2).

10. Column-type machine tool as in claim 9, having a rotary work table (9).

11. Column-type machine tool as in one of claims 1 to 10, having covers (18, 19, 20) which are slanted at an angle of at least 45 ° in the area of the guides (5, 6) on the machine bench (1) and which direct cuttings that are thrown against them into a cuttings trough (21) below the tool support (3); and having a cuttings conveyor inside the cuttings trough (21).

12. Column-type machine tool as in claim 9, 10 or 11, having roof-shaped telescopic covers (23) over the guides (11) for the work table (9) that are adjacent to the column (2), and a sloping telescopic cover (24) over guides (12) for the work table (9) that are opposite the column (2), and having cuttings troughs (25, 26) with cuttings conveyors (27, 28) on both sides of the roof-shaped cover (23).

13. Column-type machine tool as in claim 12, in which the cuttings conveyor in the cuttings trough (21) at the column (2) carries into the cuttings trough (25) adjacent to the roof-shaped telescopic covers (23).

## Revendications

1. Machine-outil à colonne, en particulier centre d'usinage par fraisage, comportant
- une colonne (2) mobile et un porte-outil (3) disposé contre celle-ci et mobile verticalement,
- un socle de machine (1),
- un système d'entraînement (7),
- des glissières de guidage (5, 6) pour la colonne (2) mobile sur le socle de machine (1), parmi lesquelles une glissière (6) est disposée en dessous de la colonne (2) sur le socle de machine (1),
**caractérisée en ce qu'**une autre glissière (5) est disposée sur le côté du socle de machine (1), à peu près au milieu de la hauteur et à peu près à hauteur du centre de gravité de la colonne (2), et
- le système d'entraînement (7) entre en contact avec la colonne (2) à hauteur de la glissière latérale (5), sans exercer un moment de basculement sensible sur la colonne (2).

2. Machine-outil à colonne selon la revendication 1, comportant un socle de machine (1) formé par une plaque (13) horizontale avec la glissière (6), orientée le long d'un bord latéral, et par une plaque (14) sensiblement verticale, posée sur ladite plaque horizontale et formant une structure de support munie de la glissière (5) sur le bord supérieur.

3. Machine-outil à colonne selon la revendication 1 ou 2, comportant un porte-outil (3) conçu pour recevoir un outil rotatif.

4. Machine-outil à colonne selon la revendication 3, comportant un chariot, mobile parallèlement aux glissières (5, 6) et destiné à recevoir l'outil rotatif.

5. Machine-outil à colonne selon la revendication 1 ou 2, comportant un porte-outil (3) conçu sous forme de caisson à broche.

6. Machine-outil à colonne selon la revendication 5, comportant une broche de travail (4) horizontale, montée sur le caisson à broche (3).

7. Machine-outil à colonne selon la revendication 6, comportant un axe de broche parallèle aux glissières (5, 6).

8. Machine-outil à colonne selon les revendications 5, 6 ou 7, comportant une broche de travail (4) mobile dans le sens axial.

9. Machine-outil à colonne selon l'une quelconque des revendications 1 à 8, comportant une table porte-pièces (9), mobile sur des glissières (11, 12) perpendiculairement aux glissières (5, 6) de la colonne (2).

10. Machine-outil à colonne selon la revendication 9, comportant une table porte-pièces (9) rotative.

11. Machine-outil à colonne selon l'une quelconque des revendications 1 à 10, comportant des caches (18, 19, 20), qui sont montés dans la zone des glissières (5, 6) sur le socle de machine (1), sont inclinés selon un angle de 45° au moins et guident les copeaux projetés contre eux dans une cuve à copeaux (21) en dessous du porte-outil (3), et un convoyeur de copeaux dans la cuve à copeaux (21).

12. Machine-outil à colonne selon les revendications 9, 10 ou 11, comportant des caches télescopiques (23) en forme de toit, posés au-dessus des glissières (11) voisines de la colonne (2) pour la table porte-pièces (9), et un cache télescopique (24) oblique, monté au-dessus de l'une des glissières (12) opposée à la colonne (2) pour la table porte-pièces (9), ainsi que des cuves à copeaux (25, 26) avec des convoyeurs de copeaux (27, 28) de part et d'autre du cache télescopique (23) en forme de toit.

13. Machine-outil à colonne selon la revendication 12, dans laquelle le convoyeur de copeaux dans la cuve à copeaux (21) sur la colonne (2) transporte les copeaux dans la cuve à copeaux (25) voisines des caches télescopiques (23) en forme de toit.
